# EUROPEAN PATENT APPLICATION

(11) **EP 1 494 205 A2**
(43) Date of publication of application: **05.01.2005**
(21) Application number: 04253928.8
(22) Date of filing: 30.06.2004
(51) Int. Cl.: G09G 3/36

(54) **Display and semiconductor device**

(30) Priority: 30.06.2003 JP 2003186413
(71) Applicant: Sanyo Electric Co., Ltd., Moriguchi-shi, Osaka 570-8677 (JP)
(72) Inventor: Senda, Michiru, Gifu-shi Gifu 502-0911 (JP)
(74) Representative: Calderbank, Thomas Roger

(57) **Abstract**

A display capable of correctly displaying images with brightness in response to a video signal is provided. This display comprises a pixel (2, 22) including a p-type first field-effect transistor (2a, 22a) subjected to application of a first bias voltage in the period of an operation of holding a pixel potential (Pix) and a pixel electrode (2b). The display applies a second bias voltage larger than the first bias voltage to the p-type first field-effect transistor in a prescribed period other than the period for the operation of holding the pixel potential.

## Description

The present invention relates to a display and a semiconductor device, and more particularly, it relates to a display and a semiconductor device each including a p-type field-effect transistor.

A display such as a liquid crystal display or an organic EL display comprising a pixel including transistors is known in general, as disclosed in Japanese Patent Laying-Open No. 2003-114651 (IPC: G09G 3/36), for example.

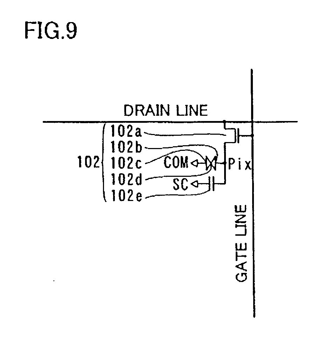

Fig. 9 is a circuit diagram showing a pixel 102 of an exemplary conventional liquid crystal display. Referring to Fig. 9, the pixel 102 constituting the conventional liquid crystal display includes a transistor 102a, a pixel electrode 102b, a common electrode 102c, common to each pixel 102, arranged oppositely to the pixel electrode 102b, a liquid crystal 102d held between the pixel electrode 102b and the common electrode 102c and a storage capacitor 102e. One of the source and the drain of the transistor 102a is connected to a drain line. The other one of the source and the drain of the transistor 102a is connected to a first electrode of the storage capacitor 102e as well as to the pixel electrode 102b holding the liquid crystal 102d along with the common electrode 102c. The gate of this transistor 102a is connected to a gate line.

In general, an n-type MOS field-effect transistor is employed for constituting a pixel in a display such as the aforementioned liquid crystal display.

In operation, the conventional liquid crystal display shown in Fig. 9 turns on the transistor 102a and supplies a prescribed video signal to the drain line. Thus, the video signal is supplied to the pixel electrode 102b through the transistor 102a, thereby driving the liquid crystal 102d. At this time, the liquid crystal display charges the storage capacitor 102e with a voltage in response to the video signal. Thereafter the liquid crystal display applies a prescribed bias voltage to the transistor 102a thereby turning off the same. In this case, the storage capacitor 102e holds the voltage (pixel potential (Pix)) in response to the video signal for a constant period. Thus, the liquid crystal 102d is continuously supplied with the voltage in response to the video signal for the constant period.

In general, however, the n-type MOS field-effect transistor employed for constituting the pixel must be brought into an LDD (lightly doped drain) structure, in order to relax an internal field. Therefore, the number of ion implantation processes as well as that of ion implantation masks are increased to disadvantageously complicate a manufacturing process for the liquid crystal display and increase the fabrication cost.

In order to avoid this problem, the pixel of the display may conceivably be constituted of a p-type MOS field-effect transistor. In this case, the p-type MOS field-effect transistor may not be brought into an LDD structure dissimilarly to the n-type MOS field-effect transistor, and hence the manufacturing process can be simplified and the fabrication cost can be reduced.

When the p-type MOS field-effect transistor is employed for constituting the pixel of the display, however, the pixel potential disadvantageously fluctuates due to a larger leakage current than that in the n-type MOS field-effect transistor. It is believed that the p-type MOS field-effect transistor has a large leakage current due to tunneling through a trap level in the vicinity of the drain thereof. Consequently, it is difficult to hold the pixel potential (Pix) at the level in response to the video signal, disadvantageously leading to difficulty in displaying images with brightness in response to the video signal.

The present invention has been proposed in order to provide a display capable of correctly displaying images with brightness in response to a video signal.

The present invention has also been proposed in order to provide a semiconductor device capable of suppressing a leakage current.

In order to attain the aforementioned objects, a display according to a first aspect of the present invention comprises a gate line, a drain line arranged to intersect with the gate line and a pixel including a p-type first field-effect transistor provided with a gate connected to the gate line as well as a source and a drain, either one of which is connected to the drain line, and subjected to application of a first bias voltage in the period of an operation of holding a pixel potential and a pixel electrode connected to the other one of the source and the drain of the p-type first field-effect transistor, and applies a second bias voltage larger than the first bias voltage to the p-type first field-effect transistor of the pixel in a prescribed period other than the period of the operation of holding the pixel potential.

The display according to the first aspect applies the second bias voltage larger than the first bias voltage to the p-type first field-effect transistor of the pixel in the prescribed period other than the period of the operation of holding the pixel potential so that a trap level in the vicinity of the drain of the p-type first field-effect transistor disappears or the trap level captures carriers (holes), whereby the carriers are conceivably inhibited from tunneling through the trap level. Thus, the p-type first field-effect transistor is inhibited from a leakage current, whereby the pixel potential can be inhibited from fluctuation resulting from a leakage current in the period of the operation of holding the pixel potential. Consequently, the display can hold the pixel potential at the level in response to the video signal, thereby correctly displaying images with brightness in response to the video signal.

A semiconductor device according to a second aspect of the present invention comprises a p-type field-effect transistor including an active layer, consisting of polycrystalline silicon, having a gate, a source and a drain so that a first bias voltage is applied between the gate and the source and between the drain and the source in an OFF state in a normal operation, and applies a second bias voltage larger than the first bias voltage to the p-type field-effect transistor in a period other than the normal operation.

The semiconductor device according to the second aspect applies the second bias voltage larger than the first bias voltage to the p-type field-effect transistor in the period other than the normal operation so that a trap level in the vicinity of the drain of the p-type field-effect transistor disappears or the trap level captures carriers (holes), whereby the carriers are conceivably inhibited from tunneling through the trap level. Thus, the p-type field-effect transistor can be inhibited from a leakage current.

The foregoing and other objects, features, aspects and advantages of the present invention will become more apparent from the following detailed description of the present invention when taken in conjunction with the accompanying drawings.

In the drawings:
Fig. 1 is a plan view showing a liquid crystal display according to a first embodiment of the present invention;
Fig. 2 is a timing chart for illustrating an operation of applying a second bias voltage to a p-channel transistor constituting a pixel of the liquid crystal display according to the first embodiment shown in Fig. 1;
Fig. 3 is an Ids-Vgs characteristic diagram of the p-channel transistor subjected to application of the second bias voltage according to the first embodiment;
Fig. 4 is an Ids-Vgs characteristic diagram of a comparative p-channel transistor subjected to application of no second bias voltage;
Fig. 5 is a timing chart for illustrating an operation of applying a second bias voltage to a p-channel transistor constituting a pixel of a liquid crystal display according to a second embodiment of the present invention;
Fig. 6 is a plan view showing an organic EL display according to a third embodiment of the present invention;
Fig. 7 is a timing chart for illustrating an operation of applying a second bias voltage to a p-channel transistor constituting a pixel of the organic EL display according to the third embodiment shown in Fig. 6;
Fig. 8 is a timing chart for illustrating an operation of applying a second bias voltage to a p-channel transistor constituting a pixel of an organic EL display according to a fourth embodiment of the present invention; and
Fig. 9 is a circuit diagram showing a pixel of an exemplary conventional liquid crystal display.

Embodiments of the present invention are now described with reference to the drawings.

### (First Embodiment)

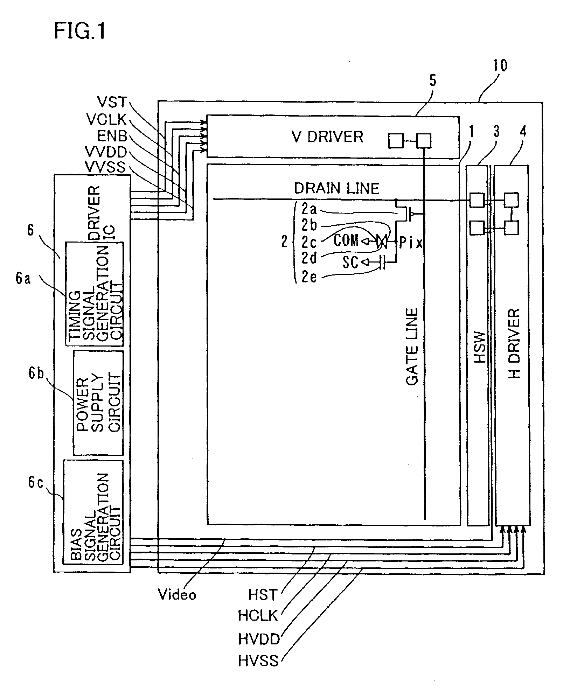

The structure of a liquid crystal display according to a first embodiment of the present invention is described with reference to Fig. 1.

In the liquid crystal display according to the first embodiment, a display part 1, a horizontal switch (HSW) 3, an H driver 4 and a V driver 5 are formed on a substrate 10, as shown in Fig. 1. The horizontal switch 3 and the H driver 4 are provided for driving (scanning) drain lines, while the V driver 5 is provided for driving (scanning) gate lines.

Pixels 2 are arranged on the display part 1 in the form of a matrix. Fig. 1 illustrates a structure for one pixel 2. Each pixel 2 includes a p-channel transistor 2a constituted of a thin-film transistor (TFT) having an active layer (not shown) consisting of polycrystalline silicon, a pixel electrode 2b, a common electrode 2c, common to each pixel 2, arranged oppositely to the pixel electrode 2b, a liquid crystal 2d held between the pixel electrode 2b and the common electrode 2c and a storage capacitor 2e. The p-channel transistor 2a is an example of the "p-type first field-effect transistor" in the present invention. One of the source and the drain of the p-channel transistor 2a is connected to a drain line. The other one of the source and the drain of the p-channel transistor 2a is connected to a first electrode of the storage capacitor 2e as well as to the pixel electrode 2b holding the liquid crystal 2d along with the common electrode 2c. The gate of this p-channel transistor 2a is connected to a gate line. In the period of an operation of holding a pixel potential (Pix) of the pixel electrode 2b, the liquid crystal display applies a first bias voltage consisting of a prescribed first gate-to-source voltage Vgs1 (about 3 V, for example) and a prescribed first drain-to-source voltage Vds1 (about -7 V, for example) to the p-channel transistor 2a.

A driver IC 6 including a timing signal generation circuit 6a, a power supply circuit 6b and a bias application signal generation circuit 6c is set outside the substrate 10. The timing signal generation circuit 6a is provided with a circuit for generating start signals HST and VST, clock signals HCLK and VCLK and an enable signal ENB. Thus, the driver IC 6 supplies the start signal HST and the clock signal HCLK to the H driver 4 while supplying the start signal VST, the clock signal VCLK and the enable signal ENB to the V driver 5. The driver IC 6 also supplies a video signal Video.

The power supply circuit 6b is provided with a circuit for generating a higher voltage VDD (about 8 V, for example) and a lower voltage VSS (about -4 V, for example). Thus, the driver IC 6 supplies a higher voltage HVDD (VDD) and a lower voltage HVSS (VSS) to the H driver 4 while supplying a higher voltage VVDD (VDD) and a lower voltage VVSS (VSS) to the V driver 5. The driver IC 6 further supplies a prescribed voltage to the common electrode (COM electrode) 2c holding the liquid crystal 2d constituting the pixel 2 of the display part 1 along with the pixel electrode 2b and a second electrode (SC electrode) of the storage capacitor 2e.

According to the first embodiment, the bias application signal generation circuit 6c is provided for applying a second bias voltage larger than the aforementioned first bias voltage to the p-channel transistor 2a. This second bias voltage includes a second gate-to-source voltage Vgs2 larger than the first gate-to-source voltage Vgs1 and a second drain-to-source voltage Vds2 larger than the first drain-to-source voltage Vds1. More specifically, the bias application signal generation circuit 6c generates a timing signal supplied to the gate line, the drain line, the COM electrode and the SC electrode in a bias application mode for applying the second bias voltage described later.

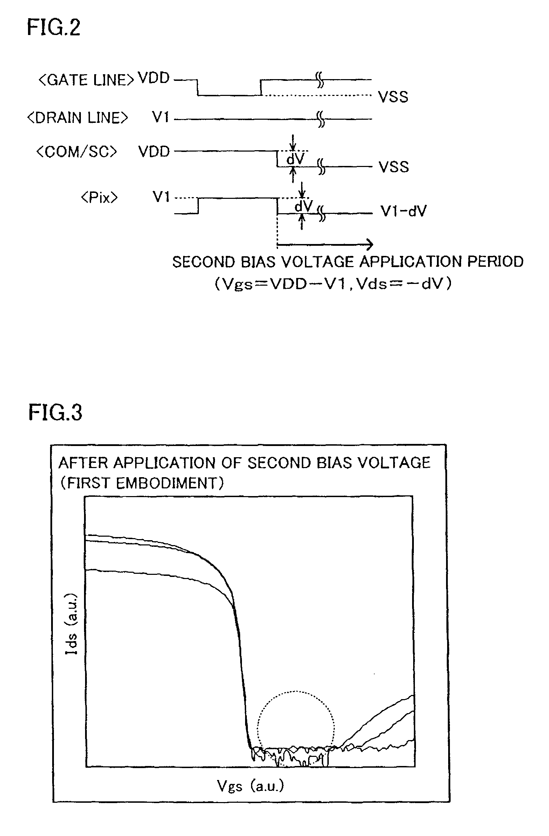

Operations of the liquid crystal display according to the first embodiment are now described with reference to Figs. 1 and 2.

Referring to Fig. 1, the liquid crystal display according to the first embodiment turns on the p-channel transistor 2a and supplies a prescribed video signal to the drain line in a normal operation (normal mode). Thus, the video signal is supplied to the pixel electrode 2b through the p-channel transistor 2a, thereby driving the liquid crystal 2d. At this time, the liquid crystal display charges the storage capacitor 2e with a voltage in response to the video signal. Thereafter the liquid crystal display turns off the p-channel transistor 2a. At this time, the liquid crystal display applies the first bias voltage consisting of the prescribed first gate-to-source voltage Vgs1 (about 3 V, for example) and the prescribed first drain-to-source voltage Vds1 (about -7 V, for example) to the OFF-state p-channel transistor 2a. In this case, the storage capacitor 2e holds the voltage (pixel potential (Fix)) in response to the video signal for a constant period. Thus, the liquid crystal 2d is continuously supplied with the voltage in response to the video signal for the constant period.

The operation of the bias application mode for applying the second bias voltage larger than the first bias voltage to the p-channel transistor 2a constituting the pixel 2 of the liquid crystal display according to the first embodiment is now described. In the bias application mode, the liquid crystal display according to the first embodiment changes the potentials of the COM electrode and the SC electrode by prescribed levels while holding the voltages of the gate line and the drain line at constant potentials, thereby applying the second bias voltage to the p-channel transistor 2a. More specifically, the signal supplied to the gate line lowers from VDD (high level) to VSS (low level), thereby turning on the p-channel transistor 2a. At this time, the liquid crystal display holds the signal supplied to the drain line at a potential V1 (0 V, for example) while holding the signal supplied to the COM electrode and the SC electrode at VDD. Thus, the pixel potential (Fix) builds up to the potential level V1 through the p-channel transistor 2a. Thereafter the signal supplied to the gate line rises to VDD (high level) thereby turning off the p-channel transistor 2a, and hence the pixel potential (Pix) is held at the level V1 due to the function of the storage capacitor 2e.

According to the first embodiment, the bias application signal generation circuit 6c controls the signal supplied from the power supply circuit 6b to the COM electrode and the SC electrode to lower from VDD to VSS. In other words, the signal supplied from the power supply circuit 6b to the COM electrode and the SC electrode lowers by a potential VDD - VSS = dV (about 12 V). Thus, the pixel potential (Pix) also lowers by the level dV, to reach a level V1 - dV (= about -12 V). Consequently, the second gate-to-source voltage Vgs2 reaches a level VDD - V1 (= about 8 V) while the second drain-to-source voltage Vds2 reaches a level V1 - dV - V1 = -dV (about -12 V). The liquid crystal display applies the second gate-to-source voltage Vgs2 (= VDD - V1) and the second drain-to-source voltage Vds2 (= -dV) to the p-channel transistor 2a as the aforementioned second bias voltage.

When the liquid crystal display applies the second bias voltage constituted of the second gate-to-source voltage Vgs2 (= about 8 V) and the second drain-to-source voltage Vds2 (= about -12 V) to the p-channel transistor 2a, a leakage current of the p-channel transistor 2a is so increased that the pixel potential (Pix) of the level V1 - dV starts to build up toward the level V1 due to the leakage current between the drain and the source of the p-channel transistor 2a. Therefore, the second drain-to-source voltage Vds2 (= -dV) constituting the second bias voltage applied to the p-channel transistor 2a is reduced. Thus, it is difficult to apply the second bias voltage to the p-channel transistor 2a for a sufficient period through a single bias application mode. According to the first embodiment, therefore, the liquid crystal display repeats the aforementioned bias application mode of applying the second bias voltage to the p-channel transistor 2a five times at intervals of about 3 ms. The liquid crystal display according to the first embodiment operates in the bias application mode when supplied with power.

According to the first embodiment, as hereinabove described, the liquid crystal display supplied with power applies the second bias voltage larger than the first bias voltage applied in the period of the operation of holding the pixel potential (Pix) to the p-channel transistor 2a so that a trap level in the vicinity of the drain of the p-channel transistor 2a disappears or captures carriers (holes), whereby the carriers are conceivably inhibited from tunneling through the trap level. Thus, the p-channel transistor 2a is inhibited from a leakage current so that the pixel potential (Pix) can be inhibited from fluctuation resulting from a leakage current in the period of the operation of holding the pixel potential (Pix). Consequently, the liquid crystal display can hold the pixel potential (Pix) at the level in response to the video signal, thereby correctly displaying images with brightness in response to the video signal.

According to the first embodiment, the second gate-to-source voltage Vgs2 constituting the second bias voltage is larger than the first gate-to-source voltage Vgs1 while the second drain-to-source voltage Vds2 also constituting the second bias voltage is larger than the first drain-to-source voltage Vds1, whereby the second bias voltage can be easily set larger than the first bias voltage. Thus, the liquid crystal display can easily apply the second bias voltage larger than the first bias voltage to the p-channel transistor 2a.

According to the first embodiment, the bias application signal generation circuit 6c controls the signal supplied from the power supply circuit 6b to the COM electrode and the SC electrode to lower from VDD to VSS, whereby the second drain-to-source voltage Vds2 constituting the second bias voltage can be easily set larger than the first drain-to-source voltage Vds1.

Further, the liquid crystal display according to the first embodiment changing the pixel potential (Pix) from VDD (about 8 V) to the level V1 - dV (about -12 V) while holding the potential of the drain line at the level V1 (about 0 V) thereby applying the second bias voltage (Vgs2 (= about 8 V) + Vds2 (= about -12 V)) larger than the first bias voltage (Vgs1 (= about 3 V) + Vds1 (= about -7 V)) to the p-channel transistor 2a can reduce a leakage current flowing from the drain line toward the pixel electrode 2b in the period of the operation of holding the pixel potential.

The liquid crystal display according to the present invention, repeating the bias application mode of applying the second bias voltage to the p-channel transistor 2a five times at the intervals of about 3 ms can apply the second bias voltage to the p-channel transistor 2a for a period sufficient for reducing a leakage current also when the applied second bias voltage fluctuates due to the leakage current.

According to the first embodiment, the p-channel transistor 2a is constituted of the thin-film transistor (TFT) including the active layer consisting of polycrystalline silicon developing a larger quantity of leakage current as compared with a transistor including an active layer consisting of single-crystalline silicon, whereby the p-channel transistor 2a can be particularly effectively inhibited from a leakage current.

According to the first embodiment, the signal supplied to the drain line in the bias application mode is at the same level as a normal low-level video signal, whereby the liquid crystal display can supply the signal to the drain in the bias application mode within the range of a signal voltage employed for the normal operation. Thus, the liquid crystal display can easily generate the signal supplied to the drain line in the bias application mode.

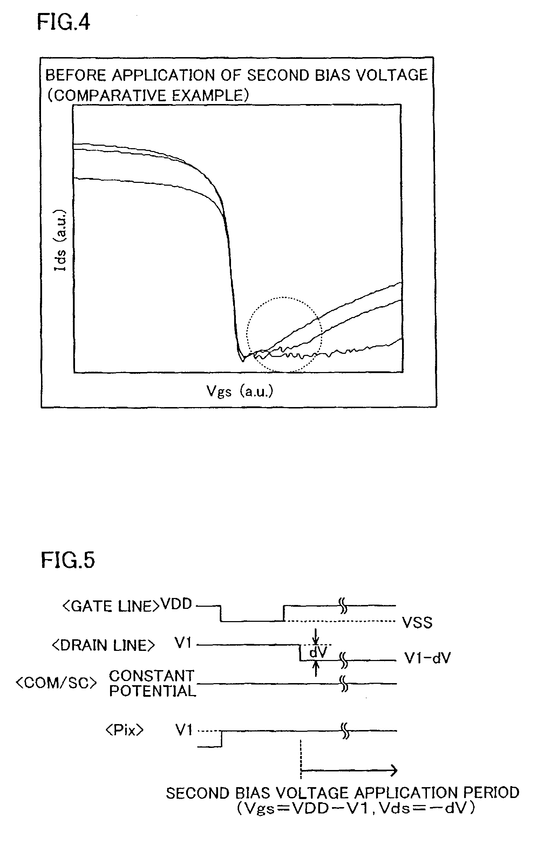

A comparative experiment made for confirming the effects of the aforementioned first embodiment is now described. Fig. 3 is an Ids-Vgs characteristic diagram of a p-channel transistor subjected to application of the second bias voltage according to the first embodiment, and Fig. 4 is an Ids-Vgs characteristic diagram of a comparative p-channel transistor subjected to application of no second bias voltage. Referring to Figs. 3 an 4, leakage currents were measured in the p-channel transistor subjected to application of the second bias voltage according to the first embodiment and the comparative p-channel transistor subjected to application of no second bias voltage respectively in this comparative experiment.

In regions (regions in OFF states of the p-channel transistors) enclosed with broken lines in Figs. 3 and 4, the p-channel transistor subjected to application of the second bias voltage (Fig. 3) exhibited a small leakage current while the p-channel transistor subjected to application of no second bias voltage (Fig. 4) exhibited a large leakage current. Thus, it has been possible to confirm that the quantity of the leakage current was reduced in the p-channel transistor subjected to application of the second bias voltage as compared with the p-channel transistor subjected to application of no second bias voltage.

### (Second Embodiment)

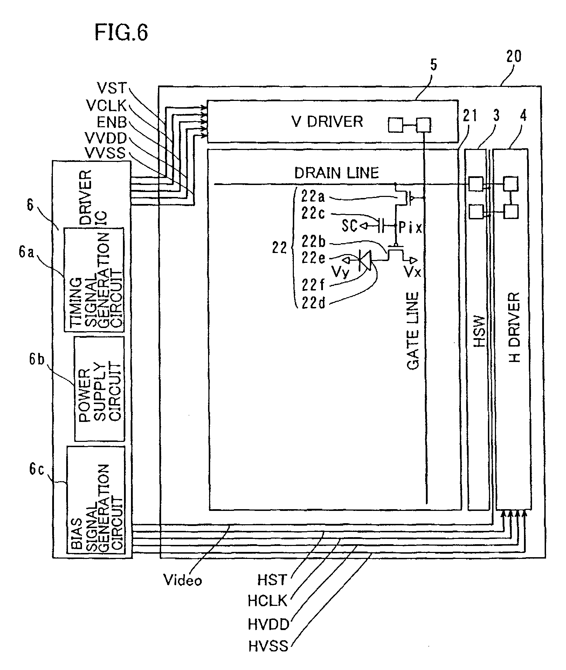

Referring to Figs. 1 and 5, a liquid crystal display according to a second embodiment of the present invention changes the potential of a drain line by a prescribed level while holding a gate line, a COM electrode and an SC electrode at constant potentials thereby applying a second bias voltage to a p-channel transistor 2a in a bias application mode, dissimilarly to the aforementioned first embodiment. The remaining structure of the second embodiment is similar to that of the aforementioned first embodiment.

In the bias application mode of the liquid crystal display according to the second embodiment, a signal supplied to the gate line lowers from VDD (high level) to VSS (low level), thereby turning on the p-channel transistor 2a. At this time, the liquid crystal display holds a signal supplied to the drain line at a level V1 (0 V, for example) while holding a signal supplied to the COM electrode and the SC electrode at a constant level. Thus, a pixel potential (Pix) builds up to the level V1 through the p-channel transistor 2a. Thereafter the signal supplied to the gate line rises to VDD (high level) thereby turning off the p-channel transistor 2a, and hence the pixel potential (Pix) is held at the level V1 due to the function of a storage capacitor 2e.

According to the second embodiment, the liquid crystal display controls the signal supplied to the drain line to lower by a level dV (about 10 V, for example). Thus, the signal supplied to the drain line reaches a level V1 - dV (= about -10 V). Consequently, a second gate-to-source voltage Vgs2 reaches a level VDD - V1 (= about 8 V), while a second drain-to-source voltage Vds2 reaches a level V1 - dV - V1 = -dV (about -10 V). The liquid crystal display applies the second gate-to-source voltage Vgs2 (= VDD - V1) and the second drain-to-source voltage Vds2 (= -dV) to the p-channel transistor 2a as the second bias voltage, similarly to the aforementioned first embodiment. According to the second embodiment, further, the liquid crystal display repeats the bias application mode of applying the second bias voltage to the p-channel transistor 2a five times at intervals of about 3 ms. In the bias application mode according to the second embodiment, the liquid crystal display supplies a constant voltage such as VDD or VSS to the SC electrode.

In the bias application mode according to the second embodiment, the liquid crystal display must supply a signal (about -10 V) having a lower potential than a normal video signal of a low level to the drain line. Therefore, the liquid crystal display according to the second embodiment, capable of easily applying a voltage other than that in a normal operation range to the drain line, preferably operates in the bias application mode before shipment.

According to the second embodiment, as hereinabove described, the liquid crystal display controlling the signal supplied to the drain line to lower by the level dV can easily set the second drain-to-source voltage Vds2 constituting the second bias voltage lower than a first drain-to-source voltage Vds1.

Further, the liquid crystal display according to the second embodiment holding the pixel potential (Pix) at the level V1 (about 0 V) while changing the potential of the drain line from the level V1 (about 0 V) to the level V1 - dV (about -10 V) thereby applying the second bias voltage (Vgs2 (= about 8 V) + Vds2 (= about -10 V)) larger than a first bias voltage (Vgs1 (= about 3 V) + Vds1 = (about -7 V)) to the p-channel transistor 2a can reduce a leakage current flowing from the pixel electrode 2b toward the drain line in the period of an operation of holding the pixel potential.

The remaining effects of the second embodiment are similar to those of the aforementioned first embodiment.

### (Third Embodiment)

Referring to Fig. 6, a third embodiment of the present invention is applied to an organic EL display.

In the organic EL display according to the third embodiment, a display part 21 is formed on a substrate 20, as shown in Fig. 6. Pixels 22 are arranged on the display part 21 in the form of a matrix. Fig. 6 shows a structure for one pixel 22 of the display part 21. Each pixel 22 includes p-channel transistors 22a and 22b constituted of thin-film transistors (TFTs) having active layers (not shown) consisting of polycrystalline silicon, a storage capacitor 22c, an anode 22d, a cathode 22e and an organic EL element 22f held between the anode 22d and the cathode 22e. The p-channel transistor 22a is an example of the "p-type first field-effect transistor" in the present invention, and the p-channel transistor 22b is an example of the "p-type second field-effect transistor" in the present invention. The organic EL element 22f is an example of the "light-emitting device" in the present invention. One of the source and the drain of the p-channel transistor 22a is connected to a drain line. The other one of the source and the drain of the p-channel transistor 22a is connected to a first electrode of the storage capacitor 22C as well as to a gate electrode of the p-channel transistor 22b. In the organic EL display according to the third embodiment, the electrodes (the first electrode of the storage capacitor 22c and the gate electrode of the p-channel transistor 22b) connected with the other one of the source and the drain of the p-channel transistor 22a correspond to the "pixel electrode" in the present invention. The gate of the p-channel transistor 22a is connected to a gate line. In the period of an operation of holding a pixel potential (Pix) of the gate electrode of the p-channel transistor 22b, the organic EL display applies a first bias voltage consisting of a prescribed first gate-to-source voltage Vgs1 (about 3 V, for example) and a prescribed first drain-to-source voltage Vds1 (about -7 V, for example) to the p-channel transistor 22a, similarly to the aforementioned embodiment.

The cathode 22e of the organic EL element 22f is connected to a first potential Vy, while the anode 22d is connected to one of the source and the drain of the p-channel transistor 22b. The other one of the source and the drain of the p-channel transistor 22b is connected to a second potential Vx. The prescribed potential Vy is an example of the "first potential" in the present invention, and the other prescribed potential Vx is an example of the "second potential" in the present invention.

The remaining structure of the third embodiment is similar to that of the aforementioned first embodiment.

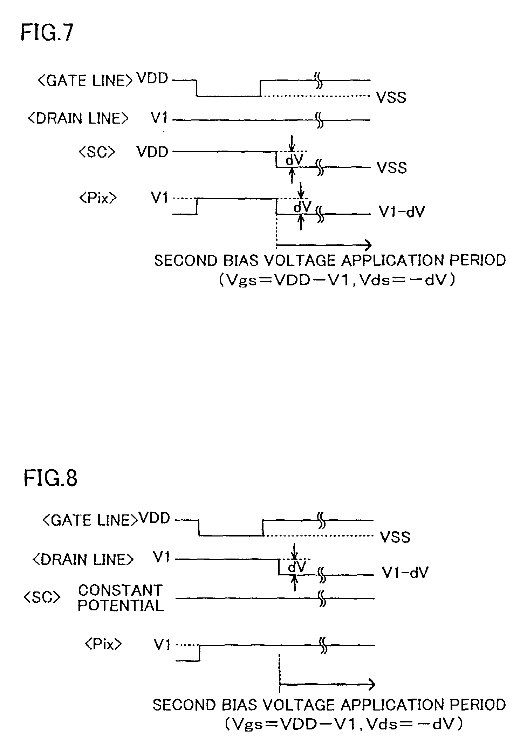

Operations of the organic EL display according to the third embodiment are now described with reference to Figs. 6 and 7.

Referring to Fig. 6, the organic EL display according to the third embodiment turns on the p-channel transistor 22a and supplies a prescribed video signal to the drain line in a normal operation (normal mode). The video signal is supplied to the gate electrode of the p-channel transistor 22b through the p-channel transistor 22a, thereby turning on the p-channel transistor 22b. Thus, the organic EL element 22f is supplied with a current for emitting light with brightness in response to the video signal supplied to the gate electrode of the p-channel transistor 22b. At this time, the organic EL display charges the storage capacitor 22c with a voltage in response to the video signal. Thereafter the organic EL display turns off the p-channel transistor 22a. At this time, the organic EL display applies the first bias voltage consisting of the prescribed first gate-to-source voltage Vgs1 (about 3 V, for example) and the prescribed first drain-to-source voltage Vds1 (about -7 V, for example) to the OFF-state p-channel transistor 22a. In this case, the storage capacitor 22c holds the voltage (the pixel potential (Fix)) in response to the video signal for a constant period. Thus, the gate electrode of the p-channel transistor 22b is continuously supplied with the voltage in response to the video signal, so that the organic EL element 22f emits light for the constant period with the brightness in response to the video signal.

An operation of a bias application mode for applying a second bias voltage larger than the first bias voltage to the p-channel transistor 22a constituting the pixel 22 of the organic EL display according to the third embodiment is now described. In the bias application mode, the organic EL display performs an operation similar to that in the bias application mode of the liquid crystal display according to the first embodiment shown in Fig. 2. In other words, the organic EL display changes the potential of an SC electrode by a prescribed level while holding the voltages of the gate line and the drain line at constant levels, thereby applying the second bias voltage to the p-channel transistor 22a. Thus, a second gate-to-source Vgs2 reaches a level VDD - V1 (= about 8 V) and a second drain-to-source voltage Vds2 reaches a level V1 - dV - V1 = -dV (about -12 V), similarly to the aforementioned first embodiment. The organic EL display repeats the aforementioned bias application mode of applying the second bias voltage to the p-channel transistor 22a five times at intervals of about 3 mn.

The organic EL display according to the third embodiment of the present invention controls first and second potentials Vy and Vx to be substantially identical to each other when applying the second bias voltage to the p-channel transistor 22a.

According to the third embodiment having the aforementioned structure, the organic EL display capable of suppressing a leakage current flowing from the drain line toward the gate electrode of the p-channel transistor 22b in the period of the operation of holding the pixel potential can also correctly display images with brightness in response to the video signal.

Further, the organic EL display according to the third embodiment, controlling the first and second potentials Vy and Vx to be substantially identical to each other for turning off the p-channel transistor 22b when applying the second bias voltage to the p-channel transistor 22a, can prevent the p-channel transistor 22b from serving as a capacitor. Thus, the organic EL display can inhibit insufficient bias application to the p-channel transistor 22a resulting from a capacitive component of the p-channel transistor 22b. Further, the organic EL display supplying no current to the organic EL element 22f can prevent the organic EL element 22f from emitting light when applying the second bias voltage.

### (Fourth Embodiment)

Referring to Figs. 6 and 8, an organic EL display according to a fourth embodiment of the present invention performs an operation similar to that in the bias application mode of the liquid crystal display according to the second embodiment shown in Fig. 5 in a bias application mode, dissimilarly to the aforementioned third embodiment. In other words, the organic EL display according to the fourth embodiment changes the potential of a drain line by a prescribed level while holding a gate line and an SC electrode at constant potentials thereby applying a second bias voltage to a p-channel transistor 22a. Thus, a second gate-to-source voltage Vgs2 reaches a level VDD - V1 (= about 8 V) while a second drain-to-source voltage Vds2 reaches a level V1 - dV - V1 = -dV (about -10 V), similarly to the aforementioned second embodiment. Further, the organic EL display repeats the aforementioned bias application mode of applying the second bias voltage to the p-channel transistor 22a five times at intervals of about 3 ms. In the bias application mode according to the fourth embodiment, the organic EL display supplies a constant voltage such as VDD or VSS to the SC electrode, similarly to the aforementioned second embodiment. At this time, the organic EL display controls first and second potentials Vy and Vx to be substantially identical to each other, similarly to the aforementioned third embodiment.

According to the fourth embodiment having the aforementioned structure, the organic EL display capable of suppressing a leakage current flowing from the gate electrode of a p-channel transistor 22b toward the drain line in the period of an operation of holding a pixel potential can also correctly display images with brightness in response to a video signal.

The remaining effects of the fourth embodiment are similar to those of the aforementioned third embodiment.

Although the present invention has been described and illustrated in detail, it is clearly understood that the same is by way of illustration and example only and is not to be taken by way of limitation, the spirit and scope of the present invention being limited only by the terms of the appended claims, as interpreted by the description and dra

For example, the present invention is not restricted to the aforementioned first to fourth embodiments but is also applicable to reduction of a leakage current in a semiconductor device including a p-type field-effect transistor consisting of a TFT including an active layer consisting of polycrystalline silicon. In other words, the leakage current of the p-type first field-effect transistor can be suppressed by applying a second bias voltage larger than a first bias voltage applied between the gate and the source and between the drain and the source in an OFF state in a normal operation, similarly to the aforementioned first to fourth embodiments.

The present invention is not restricted to the aforementioned first to fourth embodiments, but a potential other than VDD or VSS may alternatively be employed.

The present invention is not restricted to the aforementioned first to fourth embodiments but is also applicable to a display such as an inorganic EL display, for example, other than a liquid crystal display and an organic EL display.

The present invention is not restricted to the aforementioned first to third embodiments but the second bias voltage may alternatively be applied before shipment.

The present invention is not restricted to the aforementioned first to third embodiments but the pixel potential may alternatively be controlled through another control means other than the bias application signal generation circuit.

## Claims

1. A display comprising:
a gate line;
a drain line arranged to intersect with said gate line; and
a pixel (2, 22) including a p-type first field-effect transistor (2a, 22a) provided with a gate connected to said gate line as well as a source and a drain, either one of which is connected to said drain line, and subjected to application of a first bias voltage in the period of an operation of holding a pixel potential (Pix) and a pixel electrode (2b) connected to the other one of said source and said drain of said p-type first field-effect transistor,
applying a second bias voltage larger than said first bias voltage to said p-type first field-effect transistor of said pixel in a prescribed period other than the period of said operation of holding said pixel potential.

2. The display according to claim 1, wherein
said first bias voltage includes a first gate-to-source voltage (Vgs1) and a first drain-to-source voltage Vds1), and
said second bias voltage includes a second gate-to-source voltage (Vgs2) larger than said first gate-to-source voltage and a second drain-to-source voltage (Vds2) larger than said first drain-to-source voltage.

3. The display according to claim 2, setting the potentials of said gate line and said drain line to prescribed potential levels respectively so that the potential difference between said gate line and said drain line reaches said second gate-to-source voltage while controlling the potential of said pixel electrode so that the potential difference between said drain line and said pixel electrode reaches said second drain-to-source voltage when applying said second bias voltage.

4. The display according to claim 3, controlling the potential of said pixel electrode to be lower than the potential of said drain line when applying said second bias voltage.

5. The display according to claim 3, further comprising a common electrode arranged oppositely to said pixel electrode,
for controlling the potential of said pixel electrode to be lower than the potential of said drain line by changing the potential of said common electrode by a prescribed potential when applying said second bias voltage.

6. The display according to claim 3, wherein
the potential of said drain line is within the range of the potential of a video signal for holding said pixel potential when said second bias voltage is applied.

7. The display according to claim 2, setting the potentials of said gate line and said pixel electrode to prescribed potential levels respectively so that the potential difference between said gate line and said pixel electrode reaches said second gate-to-source voltage while controlling the potential of said drain line so that the potential difference between said pixel electrode and said drain line reaches said second drain-to-source voltage when applying said second bias voltage.

8. The display according to claim 7, controlling the potential of said drain line to be lower than the potential of said pixel electrode when applying said second bias voltage.

9. The display according to claim 1, applying said second bias voltage to said p-type first field-effect transistor a plurality of times.

10. The display according to claim 1, wherein
said p-type first field-effect transistor is a thin-film transistor including an active layer consisting of polycrystalline silicon.

11. The display according to claim 1, wherein
said pixel further includes a liquid crystal (2d).

12. The display according to claim 1, wherein
said pixel further includes a light-emitting device (22f) consisting of an organic material or an inorganic material.

13. The display according to claim 12, wherein
said light-emitting device includes a first electrode (22e) connected to a first potential and a second electrode (22d), and
said pixel further includes a p-type second field-effect transistor (22b) having a gate connected to said pixel electrode as well as a source and a drain, either one of which is connected to said second electrode of said light-emitting device and the other one of said source and said drain is connected to a second potential,
said display controlling said first potential and said second potential substantially to the same potential level when applying said second bias voltage to said p-type first field-effect transistor.

14. The display according to claim 1, further comprising a bias application signal generation circuit (6c) for applying a second bias voltage larger than said first bias voltage to said p-type first field-effect transistor.

15. A semiconductor device comprising a p-type field-effect transistor (2a, 22a) including an active layer, consisting of polycrystalline silicon, having a gate, a source and a drain so that a first bias voltage is applied between said gate and said source and between said drain and said source in an OFF state in a normal operation,
for applying a second bias voltage larger than said first bias voltage to said p-type field-effect transistor in a period other than said normal operation.

16. The semiconductor device according to claim 15, wherein
said first bias voltage includes a first gate-to-source voltage (Vgs1) and a first drain-to-source voltage (Vds1), and
said second bias voltage includes a second gate-to-source voltage (Vgs2) larger than said first gate-to-source voltage and a second drain-to-source voltage (Vds2) larger than said first drain-to-source voltage.

17. The semiconductor device according to claim 15, applying said second bias voltage to said p-type field-effect transistor a plurality of times.

18. The semiconductor device according to claim 15, wherein
said p-type field-effect transistor is a thin-film transistor including said active layer consisting of polycrystalline silicon.
